# EUROPEAN PATENT SPECIFICATION

(11) **EP 3 252 022 B1**
(45) Date of publication and mention of the grant of the patent: **10.03.2021**
(21) Application number: 16743163.4
(22) Date of filing: 18.01.2016
(51) Int. Cl.: B32B 17/10, B32B 5/14, C03C 27/12, B60J 1/00, B60J 1/02

(54) **LAMINATED GLASS**
VERBUNDGLAS
VERRE FEUILLETÉ

(30) Priority: 26.01.2015 JP 2015012162; 14.01.2016 JP 2016005584
(43) Date of publication of application: 06.12.2017
(73) Proprietor: AGC Inc., Tokyo 100-8405 (JP)
(72) Inventor: AOKI, Tokihiko, Tokyo 100-8405 (JP); IKEGAMI, Ayaka, Tokyo 100-8405 (JP); YAMATO, Takamitsu, Tokyo 100-8405 (JP)
(74) Representative: Müller-Boré & Partner Patentanwälte PartG mbB
(86) International application number: PCT/JP2016/051318
(87) International publication number: WO 2016/121559

(56) References cited:
- WO-A1-03/086996
- JP-A- 2000 044 296
- JP-A- 2000 119 048
- JP-A- 2002 097 041
- JP-A- 2002 516 201
- JP-A- 2007 223 883
- JP-A- 2007 223 883
- JP-A- 2007 290 549
- JP-A- 2011 207 645
- US-A- 3 700 542
- US-A- 3 700 543
- US-A- 5 812 332

## Description

### BACKGROUND OF THE INVENTION

### 1. Field of the Invention

The disclosure herein generally relates to a laminated glass.

### 2. Description of the Related Art

In recent years, projections of information on front windshield of cars have become popular (Head Up Display, commonly called "HUD"). A glass, on which information is projected (laminated glass) has a shape of a wedge so that a passenger inside the vehicle sees a projected image without distortion, and images reflected at a front surface and a back surface of the laminated glass are overlaid. The laminated glass includes a plurality of glass plates and intermediate films for bonding the plurality of glass plates. A method of forming the laminated glass in a wedged shape includes a method of grinding a glass plate to give a tapered shape (Patent Document 1), a method of forming a glass plate in a tapered shape upon forming with a float glass, or the like (Patent Documents 2 and 3).

### [Citation List]

### [Patent Literature]

[PTL 1] Japanese Unexamined Patent Application Publication No. H02-279437
[PTL 2] U.S. Patent No. 7,122,242
[PTL 3] U.S. Patent No. 3,575,694

US 5,812,332 A and WO 03/086996 A1 each teaches that a tapered or wedge shaped glass plate be used in particular in case a head up display function of a laminated glazing is envisaged (e.g., Figure 4 of the former and Figures 10 and 11 of the latter document).

US 3,700,543 A relates to an automotive windshield wherein distortion lines in the first glass ply are oriented substantially perpendicularly with respect to the distortion lines in the second glass ply.

### SUMMARY OF THE INVENTION

### [Technical Problem]

However, none of Patent Documents specifically disclose a laminated glass using a glass plate having a tapered shape, and improved visibility.

### [Solution to Problem]

In order to solve the above problem, a laminated glass including a first glass plate, which varies in a thickness from one end to another end that is opposite the one end, and in which a line is formed; a second glass plate in which a line is formed; and an intermediate film located between the first glass plate and the second glass plate, are selected and arranged as defined in claim 1.

### [Advantageous effect of Invention]

According to the present invention, a laminated glass with an enhanced visibility can be provided.

### BRIEF DESCRIPTION OF THE DRAWINGS

Other objects and further features of embodiments will become apparent from the following detailed description when read in conjunction with the accompanying drawings, in which:
[FIGURE 1]

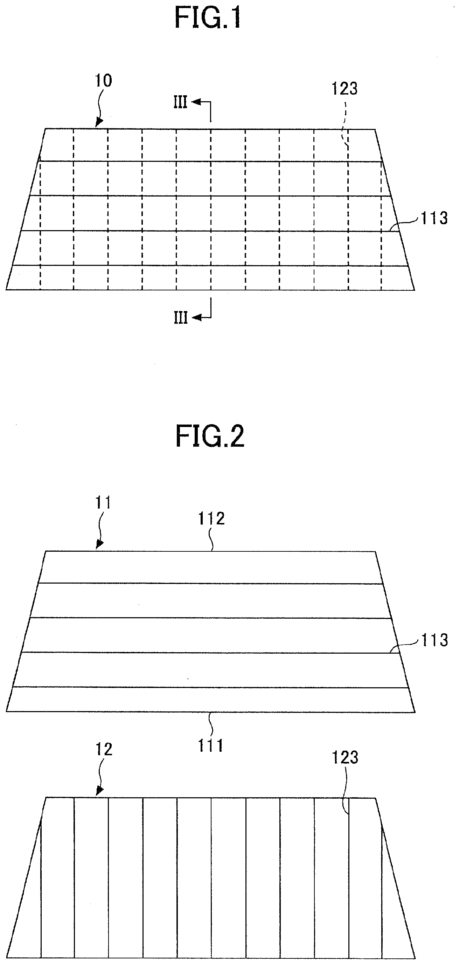

   FIG. 1 is a diagram depicting an example of a laminated glass according to an embodiment.
[FIGURE 2]
   FIG. 2 is a diagram depicting an example of the laminated glass illustrated in FIG. 1, separated into a first glass plate and a second glass plate.
[FIGURE 3]

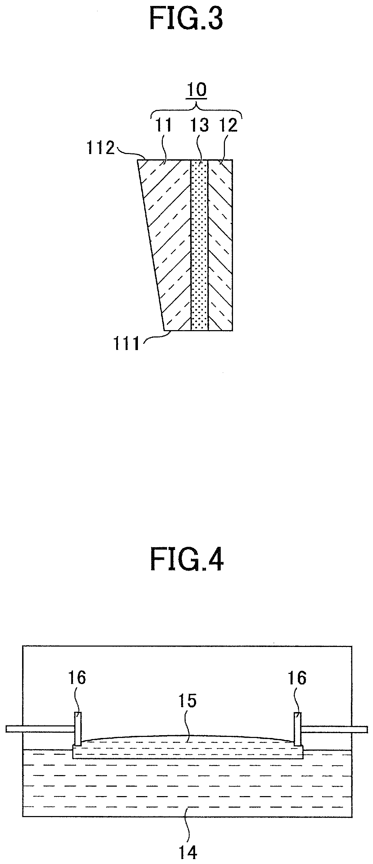

   FIG. 3 is a cross-sectional diagram depicting an example of the laminated glass cut along a line III-III illustrated in FIG. 1.
[FIGURE 4]
   FIG. 4 is a diagram depicting an example of a manufacturing method of a float glass according to the embodiment.
[FIGURE 5]

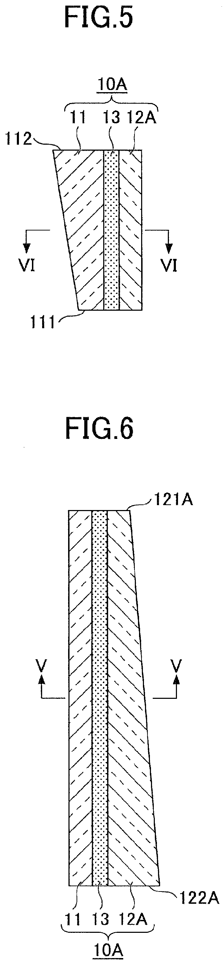

   FIG. 5 is a cross-sectional diagram depicting an example of a laminated glass according to a first variation cut along a line V-V illustrated in FIG. 6.
[FIGURE 6]
   FIG. 6 is a cross-sectional diagram depicting an example of the laminated glass cut along a line VI-VI illustrated in FIG. 5.
[FIGURE 7]

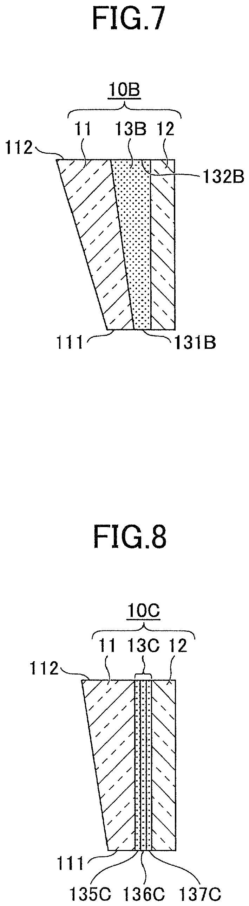

   FIG. 7 is a cross-sectional diagram depicting an example of a laminated glass according to a variation 2.
[FIGURE 8]
   FIG. 8 is a cross-sectional diagram depicting an example of a laminated glass according to a variation 3.
[FIGURE 9]

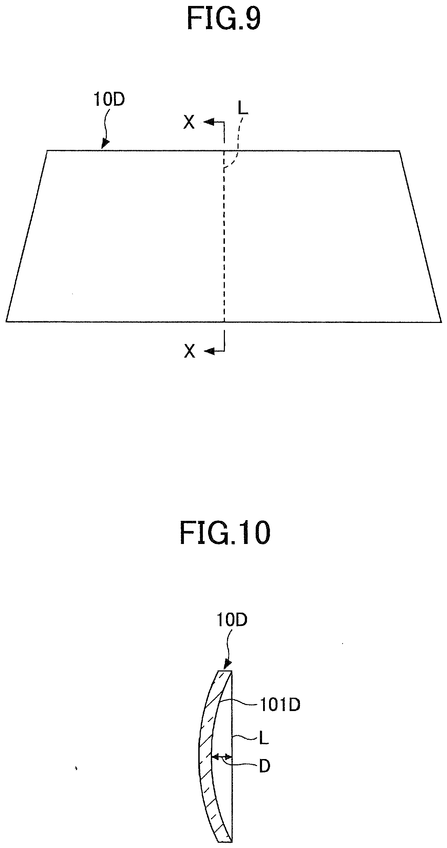

   FIG. 9 is a diagram depicting an example of a laminated glass according to a variation 4.
[FIGURE 10]
   FIG. 10 is a cross-sectional diagram depicting an example of the laminated glass cut along a line X-X illustrated in FIG. 9.
[FIGURE 11]

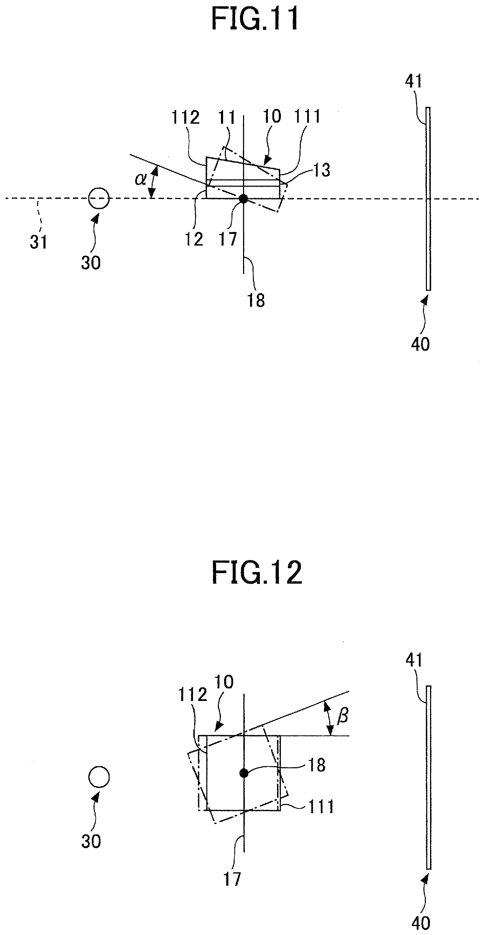

   FIG. 11 is a side view depicting an example of a state of a laminated glass according to an example 2 upon evaluation.
[FIGURE 12]
   FIG. 12 is a top view depicting an example of a state of the laminated glass according to the example 2 upon evaluation.

### DETAILED DESCRIPTION OF THE PREFERRED EMBODIMENTS

In the following, the laminated glass according to the present invention will be described in detail.

FIG. 1 is a diagram depicting a laminated glass according to the invention. FIG. 2 is a diagram depicting the laminated glass illustrated in FIG. 1, separated into a first glass plate and a second glass plate. FIG. 3 is a cross-sectional diagram depicting the laminated glass cut along a line III-III illustrated in FIG. 1. In FIG. 3, a variation in a thickness of the first glass plate 11 is illustrated exaggeratingly. As illustrated in FIG. 3, the laminated glass 10 includes the first glass plate 11, the second glass plate 12, and an intermediate film 13.

As illustrated in FIG. 3, a thickness of the first glass plate 11 varies from one end 111 to another end 112 that is opposite the one end 111. Lines 113 are formed on the first glass plate 11, as illustrated in FIG. 2. The lines 113 occur along a flow direction of the glass upon shaping.

As illustrated in FIG. 3, a thickness of the second glass plate 12 is constant. Lines 123 are formed on the second glass plate 12, as illustrated in FIG. 2. The lines 123 occur along a flow direction of the glass upon shaping.

The first glass plate 11 and the second glass plate 12 : are float glass plates, respectively.

FIG. 4 is a diagram depicting a manufacturing method for a float glass plate according to the embodiment. In FIG. 4, a vertical direction to the paper surface is a flow direction of a glass ribbon 15, a right and left direction is a width direction of the glass ribbon 15. In FIG. 4, a variation in a thickness of the glass ribbon 15 is illustrated exaggeratingly.

In the float method, a molten glass 15 is continuously supplied on a molten metal 14, such as molten tin, and the supplied molten glass 15 is caused to flow on the molten metal 14, and thereby a glass is formed as a band-shaped plate. The molten glass 15 as a band-shaped plate is also referred to as a glass ribbon 15.

In order to prevent the glass ribbon 15 from contracting in the width direction, both end portions in the width direction of the glass ribbon 15 are held by a pair or rollers 16. A plurality of pairs of rollers 16 are arranged in the flow direction at regular intervals. When the plurality of pairs of rollers 16 rotate, the glass ribbon 15 moves to a downstream side.

The glass ribbon 15 is cooled as the glass ribbon 15 moves to the downstream side, cooled and solidified, pulled up from the molten metal 14, annealed and cut. According to the above-described procedures, a float glass plate is obtained. A surface of the float glass plate that had contacted with the molten metal 14 is referred to as a bottom surface. An opposite surface of the float glass plate to the bottom surface is referred to as a top surface. The bottom surface and the top surface need not be polished.

In FIG. 4, because the pair of rollers 16 pulls the glass ribbon 15 in the width direction, the thickness of the glass ribbon 15 increases from the both end portions in the width direction of the glass ribbon 15 to the central portion in the width direction. By cutting the glass ribbon 15, the first glass plate 11 is obtained.

The thickness of the glass ribbon 15 varies in the width direction. Lines are formed on the glass ribbon 15 along the flow direction. Therefore, the thickness of the first glass plate 11 varies in a direction orthogonal to the lines 113.

When a shaping condition is controlled, a glass ribbon, in which the thickness increases from the both end portions in the width direction to the central portion in the width direction, or a glass ribbon in which the thickness increases from the one end portion in the width direction to the other end portion in the width direction, can be prepared. Naturally, a glass ribbon in which the thickness is uniform can also be prepared. The thickness of the glass ribbon can be controlled by a circumferential velocity of the rollers 16 or the like, in addition to a tensile force by the rollers 16.

The intermediate film 13 is located between the first glass plate 11 and the second glass plate 12, as illustrated in FIG. 3, and bonds the first glass plate 11 and the second glass plate 12. For a material of the intermediate film 13, a thermoplastic resin is often used. The material includes a thermoplastic resin, which has been used conventionally for this kind of purpose, such as a plasticized polyvinyl acetal-based resin, a plasticized polyvinyl chloride-based resin, a saturated polyester-based resin, a plasticized saturated polyester-based resin, a polyurethane-based resin, a plasticized polyurethane-based resin, an ethylene-vinyl acetate copolymer-based resin, or an ethylene-ethyl-acrylate copolymer-based resin.

Among the above-described materials, a plasticized polyvinyl acetal-based resin is preferably used, because of its excellent balance of performances, such as transparency, weather resistance, strength, an adhesive property, penetration resistance, impact energy absorbability, humidity resistance, a heat shielding property, and a sound insulating property. These thermoplastic resins can be used independently, or two or more kinds of resins may be used jointly. In the above-described plasticized polyvinyl acetal-based resin, the term "plasticized" means that the resin is plasticized by adding a plasticizing agent. The same applies to the other plasticized agents.

The above-described polyvinyl acetal resin includes a polyvinyl formal resin, which is obtained by reaction of polyvinyl alcohol (in the following, will be referred to as "PVA" as necessary) and formaldehyde, a narrowly defined polyvinyl acetal resin, which is obtained by reaction of PVA and acetaldehyde, a polyvinyl butyral resin (in the following, will be referred to as "PVB"), which is obtained by reaction of PVA and n-butyl aldehyde, or the like. Especially, PVB is preferably used, because of its excellent balance of performances, such as transparency, weather resistance, strength, an adhesive property, penetration resistance, impact energy absorbability, humidity resistance, a heat shielding property, and a sound insulating property. These polyvinyl acetal-based resins can be used independently, or two or more kinds of resins may be used jointly.

As illustrated in FIG. 2, the first glass plate 11 includes lines 113, and the second glass plate 12 includes lines 123. In the case where the laminated glass 10 is used for a front windshield of a vehicle, when the lines are seen by a passenger of a car in the horizontal direction, perspective distortion is generated and a visibility degrades.

A projector, such as an HUD, that projects information on the laminated glass 10 as the front windshield of the vehicle, is usually arranged in a lower part of a vehicle interior. A projection image projected from the projector is reflected at a rear surface and at a front surface of the laminated glass 10. The thickness of the laminated glass 10 is required to vary parallel to the projection direction (i.e. vertical direction), viewed in the front-back direction of the car, so that both the reflection images are not seen double. Because the thickness of the first glass plate 11 varies in a direction orthogonal to the lines 113, the lines 113 of the first glass plate 11 align in a direction orthogonal to the projection direction (i.e. horizontal direction), viewed in the front-back direction of the car. Therefore, the first glass plate 11 is used in a direction for which the visibility would otherwise degrade.

In order to improve the visibility, the intermediate film 13 bonds the first glass plate 11 and the second glass plate 12, as illustrated in FIG. 3, so that the lines 113 of the first glass plate 11 are orthogonal to the lines 123 of the second glass plate 12, as illustrated in FIG. 1, viewed in the plate thickness direction. According to the above-described configuration, a perspective distortion, which can occur with the first glass plate 11 singly, is reduced by the presence of the second glass plate 12 with the orthogonal lines and the presence of the intermediate film 13 that bonds the first glass plate 11 and the second glass plate 12, and the visibility is improved. The first glass plate 11 is arranged on an outer side of the vehicle, and the second glass plate 12 : is arranged on an inner side of the vehicle.

When a top surface of the first glass plate 11 and a top surface of the second glass plate 12 are contact surfaces of the intermediate film 13, respectively, a small undulation that occurs upon forming can be made difficult to be seen. Therefore, the perspective distortion of the laminated glass 10 is reduced, and the visibility can be enhanced.

When the top surface of the first glass plate 11 and a bottom surface of the second glass plate 12 are contact surfaces of the intermediate film 13, respectively, an influence from a difference between adhesion forces of the top surface and the bottom surface can be reduced, and an optimum adhesion performance as the laminated glass 10 can be obtained.

When a bottom surface of the first glass plate 11 and the top surface of the second glass plate 12 are contact surfaces of the intermediate film 13, respectively, an influence from a difference between adhesion forces of the top surface and the bottom surface can be reduced, and an optimum adhesion performance as the laminated glass 10 can be obtained.

When the bottom surface of the first glass plate 11 and the bottom surface of the second glass plate 12 are contact surfaces of the intermediate film 13, respectively, the top surface can be set to be an exposure surface of the laminated glass 10. On the exposure surface, a function film may be provided. Because the top surface has excellent adhesiveness with the function film, durability of the function film can be improved. The function film may be provided with at least one function of a water repellent function, an antifogging function, an infrared cut function, and an ultraviolet cut function.

FIG. 5 is a cross-sectional diagram depicting a laminated glass according to a first variation, cut along a line V-V illustrated in FIG. 6. FIG. 6 is a cross-sectional diagram depicting the laminated glass cut along a line VI-VI illustrated in FIG. 5. In FIG. 5 and FIG. 6, which do not illustrate the claimed invention, a variation in the thickness of the first glass plate 11 and a variation in the thickness of the second glass plate 12A are illustrated exaggeratingly. The laminated glass 10A, according to the first variation, includes the first glass plate 11, the second glass plate 12A, and the intermediate film 13.

The thickness of the second glass plate 12A varies from one end 121A to another end 122A that is opposite the one end 121A. The second glass plate 12A is manufactured in the same way as the first glass plate 11, and includes lines (not shown). The thickness of the second glass plate 12A varies in a direction orthogonal to the lines of the second glass plate 12A.

The intermediate film 13 bonds the first glass plate 11 and the second glass plate 12A so that the lines 113 of the first glass plate 11 are orthogonal to the lines of the second glass plate 12A, viewed in the plate thickness direction. Therefore, thicknesses of the second glass plate 12A and the first glass plate 11 vary along directions orthogonal to each other. Therefore, when information is projected onto the laminated glass 10 with respect to two directions orthogonal to each other, viewed in the front-back direction of the car, for the information with respect to both directions images reflected at a rear surface and at a front surface of the laminated glass 10A can be overlaid.

FIG. 7 is a cross-sectional diagram depicting a laminated glass according to a second variation. In FIG. 7, a variation in a thickness of a first glass plate 11 and a variation of a thickness of an intermediate film 13B are illustrated exaggeratingly. The laminated glass 10B according to the second variation includes the first glass 11, a second glass 12, and the intermediate film 13B.

The thickness of the intermediate film 13B varies from one end 131B to another end 132B that is opposite the one end 131B. In FIG. 7, the thicknesses of the intermediate film 13B and the first glass plate 11 vary along the same direction. In this case, a laminated glass 10B that includes a great variation in thickness can be manufactured.

In FIG. 7, the thicknesses of the intermediate film 13 and the first glass plate 11 vary along the same direction. However, the thicknesses may vary along directions orthogonal to each other. In this case, when information is projected onto the laminated glass from two directions orthogonal to each other, viewed in a front-back direction of a car, for the information with respect to both directions images reflected at a rear surface and at a front surface of the laminated glass can be overlaid.

The laminated glass 10B according to the second variation may include, instead of the second glass plate 12 having the constant thickness, as illustrated in FIG. 7 or the like, a second glass plate 12A having a varying thickness, as illustrated in FIG. 5 or FIG. 6, this embodiment then being outside the scope of the claims.

FIG. 8 is a cross-sectional diagram depicting a laminated glass according to a third variation. In FIG. 8, a variation in a thickness of a first glass plate 11 is illustrated exaggeratingly. The laminated glass 10C according to the third variation includes the first glass plate 11, a second glass plate 12, and an intermediate film 13C.

The intermediate film 13C is configured by three layers, i.e. includes a first resin layer 135C, a second resin layer 136C, and a third resin layer 137C. The second resin layer 136C is located between the first resin layer 135C and the third resin layer 137C, and has a smaller hardness than both the first resin layer 135C and the third resin layer 137C. According to the above-described configuration, the sound insulating properties can be improved. The first resin layer 135C and the third resin layer 137C may have the same hardness, or different hardness.

The intermediate film 13C, though configured by three layers in FIG. 8, may include another resin layer; the intermediate film 13C may be configured by four or more layers. The location of other resin layers is not particularly limited, and may be arranged at a middle location with respect to of the first resin layer 135C, the second resin layer 136C, and the third resin layer 137C, and/or outside the three layers. When the intermediate film 13C is configured by three or more layers, the sound insulating properties can be improved.

The thickness of the intermediate film 13C is constant in FIG. 8. However, the thickness may vary from one end to another end that is opposite the one end.

The laminated glass 10C according to the third variation may include, instead of the second glass plate 12 having the constant thickness, as illustrated in FIG. 8 or the like, a second glass plate 12A having a varying thickness, as illustrated in FIG. 5 or FIG. 6, this embodiment then being outside the scope of the claims.

FIG. 9 is a diagram depicting a laminated glass according to a fourth variation. FIG. 10 is a cross-sectional diagram depicting the laminated glass cut along a line X-X illustrated in FIG. 9. In FIG. 9 and FIG. 10, illustration of lines or variation in thickness will be omitted.

When the laminated glass 10D is used for a front window of a car, the laminated glass 10D is usually formed in a shape of an approximate trapezoid, viewed in the front-back direction of the car, as illustrated in FIG. 9, and formed in a curved shape, in a cross-sectional view, as illustrated in FIG. 10.

The first glass plate or the second glass plate configuring the laminated glass 10D is bent and formed after forming by the float method before bonding by the intermediate film. The bending and forming are performed for the glass softened by heating. The heating temperature for the glass upon bending and forming is about 550 - 700 °C.

A maximum depth of curvature D of the laminated glass 10D is a distance from a line L that connects the midpoints of the opposite sides of the concave face 101D of the laminated glass 10D, among the longer of the two pairs of opposite sides, to the deepest portion of the concave face 101D, in a direction orthogonal to the line L.

When the maximum depth of curvature D of the laminated glass 10D is 10 mm or more, lines can be extended sufficiently by the bending and forming, and visibility can be sufficiently improved. The maximum depth of curvature D of the laminated glass 10D is preferably 12 mm or more, and more preferably 15 mm or more.

### EXAMPLE

In the following, the present invention will be described in detail with reference to examples.

### (Example 1)

By the float method, a first glass plate, in which a thickness varied from one end to another end that is opposite the one end, and a second glass plate with a constant thickness were prepared, and pieces with a size of 30 cm square were cut out, respectively. The thickness of the first glass plate was 1.9 mm at the thinnest portion and 2.1 mm at the thickest portion. The thickness of the second glass plate was 2.0 mm. A top surface or a bottom surface of the first glass plate, and a top surface or a bottom surface of the second glass plate were flat, respectively.

The first glass plate and the second glass plate were arranged so that the strips of the first glass plate were orthogonal to the lines of the second glass plate, viewed in the plate thickness direction. A single-layered intermediate film of PVB with a constant thickness of 0.76 mm (by Sekisui Chemical Co., Ltd., S-LEC Clear Film) was held between a top surface of the first glass plate and a top surface of the second glass plate. A laminated body in this state was put into a vacuum bag, and the vacuum bag was deaerated so that a pressure gauge indicated 100 kPa or less. Afterwards, the laminated body was heated at 120 °C to perform a preliminary press-bonding. Furthermore, heating and pressurizing were performed at a temperature of 135 °C, at a pressure of 1.3 MPa, for 60 minutes in an autoclave. Finally, a laminated glass is obtained by cooling. A thickness of the laminated glass is 4.6 mm at the thinnest portion, and 4.8 mm at the thickest portion.

### (Example 2)

A laminated glass was prepared with the same material and condition as the example 1, other than that a single-layered intermediate film of PVB was held between the top surface of the first glass plate and a bottom surface of the second glass plate.

### (Example 3)

A laminated glass was prepared with the same material and condition as the example 1, other than that a three-layered intermediate film of PVB (by Sekisui Chemical Co., Ltd., S-LEC Sound Acoustic Film) was used.

### (Comparative example 1)

A laminated glass was prepared with the same material and condition as the example 1, other than that the first glass plate and the second glass plate were arranged so that lines of the first glass plate and lines of the second glass plate were parallel to each other.

### (Comparative example 2)

A laminated glass was prepared with the same material and condition as the comparative example 1, other than that a three-layered intermediate film of PVB was used.

### (State upon evaluation of laminated glass)

Next, representatively, a state upon evaluation of the laminated glass according to the example 2 will be described with reference to FIG. 11 and FIG. 12. FIG. 11 is a side view depicting a state of the laminated glass according to the example 2 upon evaluation. In FIG. 11, a solid line indicates a reference state of the laminated glass, and a dashed-dotted line indicates a slanted state of the laminated glass. FIG. 12 is a top view depicting a state of the laminated glass according to the example 2 upon evaluation. In FIG. 12, a solid line solid line indicates a reference state of the laminated glass, a dashed-dotted line indicates a slanted state of the laminated glass, and a dashed-dotted line indicates a rotating state of the laminated glass. In FIG. 11 and FIG. 12, for convenience of explanation, illustration of lines will be omitted and a variation in a thickness will be illustrated exaggeratingly. Because diagrams depicting states upon evaluation of the laminated glass according to the examples 1 and 3, and the comparative examples 1 and 2 will be the same as FIG. 11 and FIG. 12, the diagrams will be omitted.

The reference state of the laminated glass 10 was, as illustrated by the solid line in FIG. 11, assumed to be a state in which the second glass plate 12 is directed downward, and a lower surface thereof is arranged on a horizontal surface 31 that is the same as a center of the light source 30. Light from the light source 30 was, with respect to a dark location, projected through the laminated glass 10, onto a projection surface 41 in a screen 40.

When the state of the laminated glass 10 was in the reference state, as illustrated by the solid line in FIG. 12, a pair of opposite sides of the laminated glass 10 were set parallel to the projection surface 41 of the screen 40, and another pair of opposite sides of the laminated glass 10 were set orthogonal to the projection surface 41 of the screen 40.

When the state of the laminated glass 10 was in the reference state, as illustrated by the solid line in FIG. 11, the thickness of the laminated glass varied in a direction orthogonal to the projection surface 41 of the screen 40, and increased as it approached to the projection surface 41. The lines of the first glass plate 11 were assumed to be parallel to the projection surface 41 of the screen 40, when the state of the laminated glass 10 was the reference state.

The laminated glass 10 was rotated in the clockwise direction, as illustrated in FIG. 11, around an axis of rotation 17, from the reference state, illustrated by the solid line in FIG. 11, to the slanted state, illustrated by the dashed-dotted line in FIG. 11. The axis of rotation 17 was assumed to pass through a central point of the lower surface of the laminated glass 10, and be parallel to the projection surface 41 of the screen 40.

By rotating the laminated glass 10 in the clockwise direction around the axis of rotation 17, as illustrated in FIG. 11, the lower surface of the laminated glass 10 was made slanted with respect to the horizontal surface 31. An angle between the lower surface of the laminated glass 10 and the horizontal surface 31 will be referred to as an inclination angle a. When the lower surface of the laminated glass 10 coincides with the horizontal surface 31, the inclination angle α is 0°.

The laminated glass 10 was rotated in an counterclockwise direction around a revolving shaft 18, as illustrated in FIG. 12, from the slanted state, illustrated by the dashed-dotted line in FIG. 12, to the turned state, illustrated by a dashed-two dotted line in FIG. 12. A rotation angle thereof will be referred to as a turning angle β. When the laminated glass 10 is in the slanted state, as illustrated in FIG. 12, the turning angle β is 0°. The revolving shaft 18 was assumed to pass through the central point of the lower surface of the laminated glass 10, and be orthogonal to the horizontal surface 31.

### (Point light evaluation)

A point light evaluation is to project light from a hydrogen lamp, which is the light source 30 illustrated in FIG. 11 and FIG. 12, with respect to a dark location, passing through the laminated glass, onto the projection surface 41 in the screen 40, and evaluate a variation in thickness of shadow of a projected image in a direction of lines of the first glass plate. The evaluation was performed in states with the inclination angle α of 10°, 20°, 30°, and 40°. The turning angle β was assumed to be 0°. Results of evaluation for the laminated glass in the examples 1 - 3 and the comparative examples 1 - 2 are listed in TABLE 1.

**[TABLE 1]**

| | example 1 | example 2 | example 3 | comparative example 1 | comparative example 2 |
|---|---|---|---|---|---|
| lines | orthogonal | orthogonal | orthogonal | parallel | parallel |
| contact surface with intermediate film | top surface / top surface | top surface / bottom surface | top surface / top surface | top surface / bottom surface | top surface / bottom surface |
| intermediate film | single-layered PVB | single-layered PVB | three-layered PVB | single - layered PVB | three-layered PVB |
| variation in thickness of shadow (α=10°, β=0°) | great | great | great | great | great |
| variation in thickness of shadow (α=20°, β=0°) | small | small | small | great | great |
| variation in thickness of shadow (α=30°, β=0°) | small | small | small | great | great |
| variation in thickness of shadow (α=40°, β=0°) | small | small | small | great | great |

As is clear from TABLE 1, variations in thickness of shadow in the direction of lines of the first glass plate of the projected images for the laminated glasses in the examples 1 - 3 are smaller than those of the projected images for the laminated glasses in the comparative examples 1 - 2. That is, visibility can be improved.

### (Perspective distortion evaluation)

A perspective distortion evaluation is to measure a perspective distortion (minute) based on a perspective distortion test described in JIS R 3212 (Test method of safety glazing materials for road vehicles).

First, the perspective distortion evaluation was performed for the states with the inclination angle α of 20°, 30°, and 40°. The turning angle β was set to 0°. Results of evaluation for the laminated glass in the examples 1 - 2 and the comparative example 1 are listed in TABLE 2.

**[TABLE 2]**

| | example 1 | example 2 | comparative example 1 |
|---|---|---|---|
| lines | orthogonal | orthogonal | parallel |
| contact surface with intermediate film | top surface / top surface | top surface / bottom surface | top surface / bottom surface |
| intermediate film | single-layered PVB | single-layered PVB | single-layered PVB |
| perspective distortion (minute) (α=20°, β=0°) | 0 | 0 | 0.26 |
| perspective distortion (minute) (α=30°, β=0°) | 0 | 0 | 0 |
| perspective distortion (minute) (α=40°, β=0°) | 0 | 0 | 0 |

As is clear from TABLE 2, it is confirmed that when the inclination angle α is 20°, the laminated glass in the examples 1 - 2 is different from the laminated glass in the comparative example 1, and has a configuration in which a perspective distortion does not readily occur.

Next, the perspective distortion evaluation was performed for the states with the inclination angle α of 20°, and the turning angle β of 18°. Results of evaluation for the laminated glass in the examples 2 - 3 and the comparative examples 1 - 2 are listed in TABLE 3.

**[TABLE 3]**

| | example 2 | comparative example 1 | example 3 | comparative example 2 |
|---|---|---|---|---|
| lines | orthogonal | parallel | orthogonal | parallel |
| contact surface with intermediate film | top surface / bottom surface | top surface / bottom surface | top surface / top surface | top surface / bottom surface |
| intermediate film | single-layered PVB | single-layered PVB | three-layered PVB | three-layered PVB |
| perspective distortion (minute) (α=20°, β=18°) | 0.86 | 1.72 | 1.29 | 1.72 |

As is clear from TABLE 3, it is confirmed that when the state of the laminated glass is changed from an inclination state to a turning state to increase an optical path length in the glass, the effect of the present invention is expressed further remarkably.

Therefore, as described above, it was found that according to the present invention a laminated glass in which visibility is improved can be provided.

As described above, the preferred embodiments and the like for the laminated glass have been described in detail. However, the present invention is not limited to the above-described specific embodiments, but various variations and modifications may be made without deviating from the scope of the claims.

### INDUSTRIAL APPLICABILITY

The laminated glass disclosed in the present application can be preferably applied to an apparatus for projecting an image, used for vehicles, such as cars or trains, aircraft, such as airplanes or helicopters, general-use windows, such as houses or buildings, stationary type screens, or mobile screens.

## Claims

1. A laminated glass comprising:
a first glass plate that is wedge-shaped and has a thickness varying in a vertical direction from one end to another end that is opposite to the one end, and in which a line is formed in a horizontal direction of the first glass plate;
a second glass plate that has a constant thickness, in which a line is formed; and
an intermediate film located between the first glass plate and the second glass plate, bonding the first glass plate and the second glass plate so that the line of the first glass plate and the line of the second glass plate are mutually orthogonal, in a view of a plate thickness direction,
wherein each of the first glass plate and the second glass plate is a float glass plate, and
wherein the lines occur along a flow direction of a glass upon shaping.

2. The laminated glass according to claim 1,
wherein each of the first glass plate and the second glass plate has a bottom surface which had contact with a molten metal upon forming by a float method, and a top surface which is opposite to the bottom surface, and
the top surface of the first glass plate and the top surface of the second glass plate are contact surfaces of the intermediate film.

3. The laminated glass according to claim 1, wherein each of the first glass plate and the second glass plate has a bottom surface which had contact with a molten metal upon forming by a float method, and a top surface which is opposite to the bottom surface, and
the top surface of the first glass plate and the bottom surface of the second glass plate are contact surfaces of the intermediate film.

4. The laminated glass according to claim 1, wherein each of the first glass plate and the second glass plate has a bottom surface which had contact with a molten metal upon forming by a float method, and a top surface which is opposite to the bottom surface, and
the bottom surface of the first glass plate and the top surface of the second glass plate are contact surfaces of the intermediate film.

5. The laminated glass according to claim 1,
wherein each of the first glass plate and the second glass plate has a bottom surface which had contact with a molten metal upon forming by a float method, and a top surface which is opposite to the bottom surface, and
the bottom surface of the first glass plate and the bottom surface of the second glass plate are contact surfaces of the intermediate film.

6. The laminated glass according to any one of claims 1 to 5,
wherein the intermediate film varies in thickness from one end to another end that is opposite the one end.

7. The laminated glass according to any one of claims 1 to 6,
wherein the intermediate film is configured by three or more layers.

8. The laminated glass according to any one of claims 1 to 7,
wherein the maximum depth of curvature of the laminated glass is 10 mm or more. , the maximum depth of curvature being defined in the description.

## Patentansprüche

1. Verbundglas, umfassend:
eine erste Glasplatte, die keilförmig ist und eine Dicke aufweist, die in einer vertikalen Richtung von einem Ende zu einem anderen Ende, das dem einen Ende gegenüberliegt, variiert, und in der eine Linie in einer horizontalen Richtung der ersten Glasplatte gebildet ist;
eine zweite Glasplatte, die eine konstante Dicke aufweist, in der eine Linie gebildet ist; und
einen Zwischenfilm, angeordnet zwischen der ersten Glasplatte und der zweiten Glasplatte, der die erste Glasplatte und die zweite Glasplatte verbindet, so dass die Linie der ersten Glasplatte und die Linie der zweiten Glasplatte in einer Ansicht einer Plattendickenrichtung zueinander orthogonal sind,
wobei jede der ersten Glasplatte und der zweiten Glasplatte eine Floatglasplatte ist und
wobei die Linien beim Formen entlang einer Fließrichtung eines Glases auftreten.

2. Verbundglas nach Anspruch 1,
wobei jede der ersten Glasplatte und der zweiten Glasplatte eine Unterseitenoberfläche, die beim Formen durch ein Floatverfahren Kontakt mit einem geschmolzenen Metall hatte, und eine Oberseitenoberfläche, die der Unterseitenoberfläche gegenüberliegt, aufweist und die Oberseitenoberfläche der ersten Glasplatte und die Oberseitenoberfläche der zweiten Glasplatte Kontaktoberflächen des Zwischenfilms sind.

3. Verbundglas nach Anspruch 1,
wobei jede der ersten Glasplatte und der zweiten Glasplatte eine Unterseitenoberfläche, die beim Formen durch ein Floatverfahren Kontakt mit einem geschmolzenen Metall hatte, und eine Oberseitenoberfläche, die der Unterseitenoberfläche gegenüberliegt, aufweist und
die Oberseitenoberfläche der ersten Glasplatte und die Unterseitenoberfläche der zweiten Glasplatte Kontaktoberflächen des Zwischenfilms sind.

4. Verbundglas nach Anspruch 1,
wobei jede der ersten Glasplatte und der zweiten Glasplatte eine Unterseitenoberfläche, die beim Formen durch ein Floatverfahren Kontakt mit einem geschmolzenen Metall hatte, und eine Oberseitenoberfläche, die der Unterseitenoberfläche gegenüberliegt, aufweist und
die Unterseitenoberfläche der ersten Glasplatte und die Oberseitenoberfläche der zweiten Glasplatte Kontaktoberflächen des Zwischenfilms sind.

5. Verbundglas nach Anspruch 1,
wobei jede der ersten Glasplatte und der zweiten Glasplatte eine Unterseitenoberfläche, die beim Formen durch ein Floatverfahren Kontakt mit einem geschmolzenen Metall hatte, und eine Oberseitenoberfläche, die der Unterseitenoberfläche gegenüberliegt, aufweist und
die Unterseitenoberfläche der ersten Glasplatte und die Unterseitenoberfläche der zweiten Glasplatte Kontaktoberflächen des Zwischenfilms sind.

6. Verbundglas nach einem der Ansprüche 1 bis 5,
wobei der Zwischenfilm von einem Ende zu einem anderen Ende, das dem einen Ende gegenüberliegt, in der Dicke variiert.

7. Verbundglas nach einem der Ansprüche 1 bis 6,
wobei der Zwischenfilm durch drei oder mehr Schichten aufgebaut ist.

8. Verbundglas nach einem der Ansprüche 1 bis 7,
wobei die maximale Krümmungstiefe des Verbundglases 10 mm oder mehr beträgt, wobei die maximale Krümmungstiefe in der Beschreibung definiert ist.

## Revendications

1. Verre feuilleté comprenant :
une première plaque de verre qui est cunéiforme et présente une épaisseur variant dans une direction verticale d'une première extrémité à une autre extrémité qui est opposée à la première extrémité, et dans laquelle une ligne est formée dans une direction horizontale de la première plaque de verre ;
une seconde plaque de verre qui présente une épaisseur constante, dans laquelle une ligne est formée ; et
un film intermédiaire situé entre la première plaque de verre et la seconde plaque de verre, liant la première plaque de verre et la seconde plaque de verre de telle sorte que la ligne de la première plaque de verre et la ligne de la seconde plaque de verre sont mutuellement orthogonales, sur une vue d'une direction d'épaisseur de plaque,
dans lequel chacune de la première plaque de verre et de la seconde plaque de verre est une plaque de verre flottant, et
dans lequel les lignes surviennent le long d'une direction d'écoulement d'un verre lors du façonnage.

2. Verre feuilleté selon la revendication 1,
dans lequel chacune de la première plaque de verre et de la seconde plaque de verre comporte une surface de fond qui avait un contact avec un métal fondu lors de la formation par un procédé de flottage, et une surface supérieure qui est opposée à la surface de fond, et
la surface supérieure de la première plaque de verre et la surface supérieure de la seconde plaque de verre sont des surfaces de contact du film intermédiaire.

3. Verre feuilleté selon la revendication 1,
dans lequel chacune de la première plaque de verre et de la seconde plaque de verre comporte une surface de fond qui avait un contact avec un métal fondu lors de la formation par un procédé de flottage, et une surface supérieure qui est opposée à la surface de fond, et
la surface supérieure de la première plaque de verre et la surface de fond de la seconde plaque de verre sont des surfaces de contact du film intermédiaire.

4. Verre feuilleté selon la revendication 1,
dans lequel chacune de la première plaque de verre et de la seconde plaque de verre comporte une surface de fond qui avait un contact avec un métal fondu lors de la formation par un procédé de flottage, et une surface supérieure qui est opposée à la surface de fond, et
la surface de fond de la première plaque de verre et la surface supérieure de la seconde plaque de verre sont des surfaces de contact du film intermédiaire.

5. Verre feuilleté selon la revendication 1,
dans lequel chacune de la première plaque de verre et de la seconde plaque de verre comporte une surface de fond qui avait un contact avec un métal fondu lors de la formation par un procédé de flottage, et une surface supérieure qui est opposée à la surface de fond, et
la surface de fond de la première plaque de verre et la surface de fond de la seconde plaque de verre sont des surfaces de contact du film intermédiaire.

6. Verre feuilleté selon l'une quelconque des revendications 1 à 5,
dans lequel le film intermédiaire varie en épaisseur d'une première extrémité à une autre extrémité qui est opposée à la première extrémité.

7. Verre feuilleté selon l'une quelconque des revendications 1 à 6,
dans lequel le film intermédiaire est configuré par trois couches ou plus.

8. Verre feuilleté selon l'une quelconque des revendications 1 à 7,
dans lequel la profondeur de courbure maximale du verre feuilleté est de 10 mm ou plus, la profondeur de courbure maximale étant définie dans la description.
